# EUROPEAN PATENT SPECIFICATION

(11) **EP 3 457 336 B1**
(45) Date of publication and mention of the grant of the patent: **20.03.2024**
(21) Application number: 17795546.5
(22) Date of filing: 10.05.2017
(51) Int. Cl.: G08G 1/01, G08G 1/056, G08G 1/095, G06Q 10/04, G08G 1/0968

(54) **METHOD AND DEVICE FOR ACQUIRING TRAFFIC LIGHT DURATION DATA**
VERFAHREN UND VORRICHTUNG ZUR ERFASSUNG VERKEHRSAMPELDAUERDATEN
PROCÉDÉ ET DISPOSITIF D'ACQUISITION DE DONNÉES DE DURÉE DE FEUX DE SIGNALISATION

(30) Priority: 13.05.2016 CN 201610317147
(43) Date of publication of application: 20.03.2019
(73) Proprietor: Tencent Technology (Shenzhen) Company Limited, Shenzhen, Guangdong, 518057 (CN)
(72) Inventor: SUN, Liguang, Shenzhen, Guangdong 518057 (CN)
(74) Representative: Eisenführ Speiser
(86) International application number: PCT/CN2017/083734
(87) International publication number: WO 2017/193928

(56) References cited:
- WO-A1-2013/007075
- CN-A- 101 577 054
- CN-A- 102 142 197
- CN-A- 104 064 039
- CN-A- 105 976 062
- US-A1- 2013 076 538
- US-A1- 2014 266 798
- STEFAN SCHROEDL ET AL: "Mining GPS Traces for Map Refinement", DATA MINING AND KNOWLEDGE DISCOVERY, KLUWER ACADEMIC PUBLISHERS, BO, vol. 9, no. 1, 1 July 2004 (2004-07-01), pages 59-87, XP019277108, ISSN: 1573-756X

## Description

This application claims priority to Chinese Patent Application No. 201610317147.2, titled "SIGNAL LIGHT DURATION DATA DIGGING METHOD, TRAVEL SERVICE IMPLEMENTATION METHOD AND APPARATUS" filed with the Patent Office of China on May 13, 2016, which is incorporated by reference in its entirety.

### FIELD OF THE TECHNOLOGY

The present disclosure relates to the technical field of internet application, and in particular, to a method and apparatus for obtaining signal light duration data.

### BACKGROUND OF THE DISCLOSURE

Signal light duration in a roadway network, as important traffic management information, plays an important role in accurate and reliable travel services. A passing duration for passing a complete path or a congested road section can be predicted according to signal light duration data of an intersection in the roadway network, thereby providing a travel service according to the predicted passing duration.

In a method, the signal light duration data is directly obtained by establishing close cooperation with a traffic management department. However, the method is restricted by the degree of the cooperation and the limited completeness and timeliness of data acquired by the traffic management department, and thus it is hard to timely obtain complete and accurate data resources.

In another method, the signal light duration data is obtained by digging from positioned running track of a mobile phone or a vehicle, i.e., estimating based on a time period that a track point in the running track stays at an intersection.

However, the time estimation by this method is affected by many external factors, which results in a quite large error in the final calculation result.

US 2014/0266798 A1 discloses a method of obtaining data relating to the timing of a transition between phases of a traffic control signal. The method involves obtaining live probe data relating to the travel of vehicles in the region of the traffic control signal, and using the data to determine times at which a given transition of the signal has occurred. This is carried out by consideration of the distance from the traffic signal at which a vehicle waits when stopped at the signal, and a time of passing the signal, as determined using the probe data. Different transition time pairs are analysed to obtain time differences between the transition times. A cycle time which best fits the time difference data is determined, and used with the transition time data to predict future transition times of the traffic control signal.

### SUMMARY

On this basis, the present invention provides a method for obtaining signal light duration data, according to claim 1.

In addition, the present invention also provides an apparatus for obtaining signal light duration data, according to claim 13.

In addition, the present invention also provides a method and an apparatus for implementing a travel service, according to claim 11.

### BRIEF DESCRIPTION OF THE DRAWINGS

FIG. 1 is a flowchart of a method for obtaining signal light duration data according to an embodiment;
FIG. 2 is a schematic diagram of signal light duration data of an intersection according to an embodiment;
FIG. 3 is a flowchart of a method for obtaining an intersection phase and a track sequence set corresponding to the intersection phase according to running track data of a positioning terminal;
FIG. 4 is a flowchart of a method for determining a running direction existing at an intersection according to running track data, and obtaining an intersection phase divided at the intersection and a track sequence set corresponding to the intersection phase according to the running direction;
FIG. 5 a schematic diagram of road sections connecting to an intersection in a road network according to an embodiment;
FIG. 6 is a flowchart of a method for obtaining a moving-nonmoving state alternation sequence from the track sequence set for each intersection phase in FIG. 1;
FIG. 7 is a schematic diagram of a relationship between a traffic flow and a phase state according to an embodiment;
FIG. 8 is a flowchart of a method for obtaining a signal light duration sample value of an intersection phase according to duration and location information of a state of a moving-nonmoving state alternation sequence according to an embodiment;
FIG. 9 is a flowchart of a method for generating signal light duration data according to the signal light duration sample value in FIG. 1;
FIG. 10 is a flowchart of a method for generating signal light duration data of an intersection according to sample distribution by using a signal light duration sample value of an intersection phase;
FIG. 11 a flowchart of a travel service implementation method according to an embodiment;
FIG. 12 is a flowchart of a travel service implementation method according to another embodiment;
FIG. 13 is a schematic structural diagram of an apparatus for obtaining signal light duration data according to an embodiment;
FIG. 14 is a schematic structural diagram of a data processing module;
FIG. 15 is a schematic structural diagram of an intersection phase counting unit;
FIG. 16 is a schematic structural diagram of a recognition module;
FIG. 17 is a schematic structural diagram of a sample obtaining module;
FIG. 18 is a schematic structural diagram of a duration data generation module;
FIG. 19 is a schematic structural diagram of a data generation execution unit;
FIG. 20 is a schematic structural diagram of a calculation apparatus according to an embodiment of the present disclosure;
FIG. 21 is a schematic structural diagram of a travel service implementation module according to an embodiment; and
FIG. 22 is a schematic structural diagram of a travel service implementation module according to another embodiment.

### DESCRIPTION OF EMBODIMENTS

Typical implementations reflecting the features and advantages of the present disclosure are described in detail in the following. It should be understood that the present disclosure may have various changes based on the different implementations, all of which do not depart from the scope of the present disclosure. Moreover, the description and drawings in the present disclosure are essentially used for description only, and are not used for limiting the present disclosure.

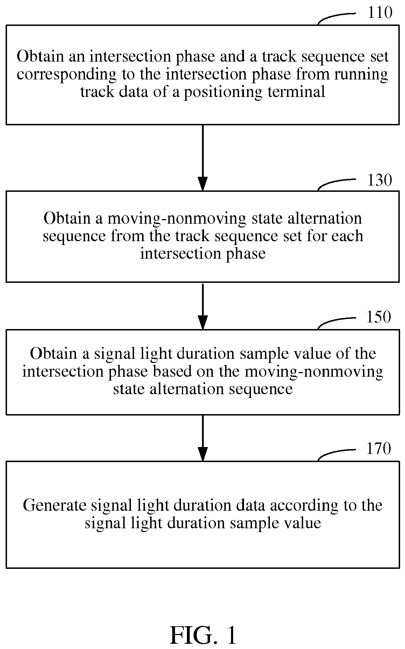

In an embodiment, a method for digging or obtaining signal light duration data, as shown in FIG. 1, includes steps 110 to step 170.

In step 110, an intersection phase and a track sequence set corresponding to the intersection phase are obtained from running track data of a positioning terminal.

A positioning terminal refers to a portable mobile terminal, a vehicle (for example, a vehicle in which a positioning element is mounted), or other devices having a positioning function (especially outdoor positioning function). During the running of the vehicle, or during the moving of the portable mobile terminal or other devices having a positioning function along with the vehicle, positioning is continuously performed, for example, positioning is performed once per second. Location information (that is, positioning result information) of the location is obtained in each positioning, as a track point in a running track. The positioning terminal sends the positioning result information to a server wirelessly connected to the positioning terminal, where the positioning result information is recorded to the running track data of the positioning terminal, so that the obtained running track data can accurately record the running track.

That is, in a road network, there are a great number of running vehicles. The vehicles or carried devices can be used as positioning terminals. From the above, it can be learned that the obtained running track data is sent by the positioning terminals in the road network to the server, and the running track data of the positioning terminals is used as input data for digging the signal light duration data.

The running track data of the positioning terminal corresponds to a running track of the positioning terminal in the road network. Therefore, an intersection passed by the positioning terminal can be obtained according to the running track data, and further phase counting is then performed for each intersection according to the running track data, to obtain an intersection phase in the running track.

It should be noted that the performed phase counting refers to making statistics about intersection phases in a running track according to running track data, to obtain an intersection in the running track and divided intersection phases for each intersection.

The intersection phase may correspond to one or more running directions at an intersection, and each intersection phase has independent duration. The intersection phase can be obtained by performing counting on the running track data of the running track in the road network.

For example, for a cross intersection in a road network, if a simplest dual intersection phase control is adopted, an intersection phase 1 corresponds to a running direction of turning left, running straight, and turning around for traffic flows in two directions of the south and the north, and an intersection phase 2 corresponding to a running direction of turning left, running straight, and turning around for traffic flows in two directions of the east and the west. In one section of a time cycle of a signal light, the traffic flows in the south and north directions turn left, run straight, and turn around, and in the other section of the time cycle of the signal light, the traffic flows in the east and west directions turn left, run straight, and turn around.

With the counting of an intersection phase for each intersection in the running track data, a track sequence set of the intersection phase may also be obtained in addition to the intersection phase.

The track sequence set corresponding to the intersection phase refers to a running track, in the running track data, satisfying the condition that the track enters the intersection to which the intersection phase belongs, and has a running direction in the intersection which is allowed in the intersection phase.

The track sequence set of the intersection phase includes several track sequences. The track sequences are obtained from the running track data corresponding to the intersection phase. In addition, each track sequence uniquely corresponds to one piece of running track data. The running track data corresponding to the intersection phase refers to running track data from the multiple positioning terminals in which a corresponding running track enters the intersection to which the intersection phase belongs, and has a running direction consistent with a running direction allowed in the intersection phase.

The intersection phase is obtained through counting on the running track data corresponding to the intersection phase, and the track sequence set of the intersection phase is also obtained according to the corresponding running track data.

In step 130, a moving-nonmoving state alternation sequence is obtained from the track sequence set for each intersection phase. In the embodiments of the present disclosure, the moving-nonmoving state alternation sequence is a track sequence in a congestion state. Hence, the signal light duration data is subsequently obtained based on the moving-nonmoving state alternation sequence in the congestion state, thereby having a stable space-time regularity.

In step 150, a signal light duration sample value of the intersection phase is obtained based on the moving-nonmoving state alternation sequence.

A day may be divided into multiple time periods, and signal light duration sample values of an intersection phase may be obtained for one or more time periods.

After the phase counting is performed to obtain intersection phases in the road network, for each of the intersection phase, the track sequence set of the intersection phase includes a track sequence corresponding to running track data. Therefore, the track sequence included in the track sequence set also corresponds to a running track in the road network.

Therefore, the congestion state existing in the track sequence set can be recognized, and the moving-nonmoving state alternation sequence can be obtained from the track sequence in the congestion state.

It should be noted that most track sequences in the congestion state have alternate moving and nonmoving states, which corresponds to an actual situation that a running vehicle in a congestion state moves slowly along with a traffic flow or even stops.

From the above, it can be learned that the moving state refers to a state in which a vehicle slowly moves forward along with a traffic flow, during which a stopping state may exist for a short time period, but on the whole the vehicle is continuously moving forward. The nonmoving state refers to a state in which a vehicle fully stops in a traffic flow.

After recognizing, from the track sequence set, multiple track sequences in which the congestion state exists, a moving-nonmoving state alternation sequence is obtained from the multiple track sequences in which the congestion state exists. Further a model is constructed for each intersection phase by using a moving-nonmoving state alternation sequence corresponding to the intersection phase, so as to calculate the signal light duration sample values in different time periods of the intersection phase.

The signal light duration data obtained for an intersection phase is used as a large quantity of samples calculated for the intersection phase, for providing data support for subsequent operation. In addition, each time period of the intersection phase corresponds to several signal during sample values among the large quantity of samples.

In step 170, signal light duration data is generated according to the signal light duration sample value.

In the embodiments of the present disclosure, the signal light duration sample values of one or more time periods in a day may be used for generating the signal light duration data, and signal light duration sample distribution may also be considered in generation of the signal light duration data.

After calculating the large quantity of signal light duration sample values in different time periods of the intersection phase, signal light duration sample value distribution is obtained for each intersection phase, to obtain discreteness of the signal light duration sample value distribution, so as to further obtain signal light duration data adaptive to the signal light duration sample value distribution.

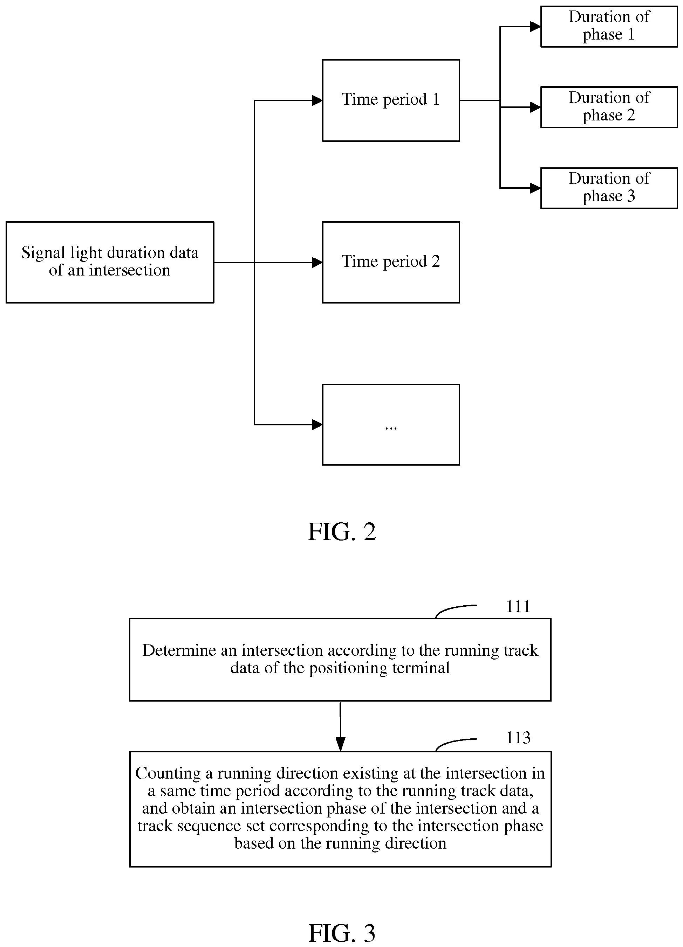

The signal light duration data of the intersection consists of the signal light duration data of the intersection phases. The signal light duration data of the intersection essentially is a timing scheme of all the intersection phases, for example, a timing scheme for the whole day, or a timing scheme for different time periods, as shown in FIG. 2.

In the signal light duration data of an intersection shown in FIG. 2, the whole day is divided into multiple time periods, that is, a time period 1, a time period 2,..., each corresponding to signal light duration data of each intersection phase. That is, each time period is configured with duration of each intersection phase in the intersection.

By the process of digging or obtaining the signal light duration data, the signal light duration sample values for each time period is obtained based on the moving-nonmoving state alternation sequence in the congestion state, so that the signal light duration data is subsequently obtained based on the moving-nonmoving state alternation sequence in the congestion state in each time period, thereby having a stable space-time regularity.

An example of the above process is a process of digging signal light duration data from a track of a vehicle in a congestion state. Imaging the case that the vehicle meets a severe congested intersection, the vehicle may go through two or more complete signal cycles in the congested traffic flow. Since the behavior of the vehicle is restricted by the congested traffic flow, it has a stable space-time regularity, so that the obtained signal light duration data is complete and accurate data resources, thereby providing high reliability.

A passing duration for passing through a complete path or a congested road section can be accurately predicted by using the obtained signal light duration data, thereby providing an accurate and reliable travel service.

Further, before step 110, the method further includes obtaining and recording track points from the positioning performed by a positioning terminal, so as to obtain running track data of the positioning terminal.

A vehicle running in a road network has a positioning function. In one aspect, the vehicle is able to perform positioning and send positioning result information to a server digging signal light duration data, and the server is able to record the positioning result information to obtain corresponding running track data. In the process, the vehicle is used as the positioning terminal.

In another aspect, a portable mobile terminal and other devices having a positioning function carried in a vehicle running in an intersection may also be used as the positioning terminal for positioning.

After receiving the positioning result information obtained from the positioning performed by the positioning terminal, track points of the positioning terminal in the running is obtained according to the positioning result, and thus the running track data of the positioning terminal is obtained. The running track data reflects a running track of the positioning terminal.

In the embodiments of the present disclosure, the running track data of the positioning terminal is a record sequence. Each piece of record in the record sequence represents one piece of positioning result information. Specifically, data content included in each record may include: a longitude coordinate, a latitude coordinate, a time stamp, a positioning terminal orientation angle, and an instantaneous point speed.

For example, a time interval for positioning is set in advance, which may be a second. That is, a new piece of positioning result information is obtained per second, so as to finally obtain the running track data of the positioning terminal.

In this way, a huge volume of running track data is obtained, which covers the whole road network, and a large quantity of running racks in the road network are obtained, to provide a huge quantity of input data for digging of the signal light duration data, thereby guaranteeing completeness and accuracy of the signal light duration data dug from the input data.

In an embodiment, as shown in FIG. 3, step 110 includes step 111 and step 113.

In step 111, an intersection is determined according to the running track data of the positioning terminal.

As described above, the positioning terminals all have running track data. The running track data corresponds to a running track, and therefore, an intersection passed by the positioning terminal during the running (or moving) can be obtained from the running track data.

In step 113: a running direction existing at the intersection is determined according to the running track data, and an intersection phase of the intersection and a track sequence set corresponding to the intersection phase is obtained based on the running direction.

In the step, the running direction existing at the intersection may be determined for one or more time periods of a whole day. Counting and analysis may be performed on the running track data, so as to determine the running direction existing at the intersection in a time period.

In the process of obtaining a corresponding intersection according to running track data, the running track data used for obtaining the intersection corresponds to the intersection. That is, the running track data used for obtaining the intersection is running track data corresponding to the running tracks that enter the intersection.

For the running track data corresponding to running tracks that enter the intersection, since the intersection includes two or more intersection phases (different intersection phases allow vehicles in different directions to pass the intersection), the existing running direction can be obtained through counting on the running track data, so that the intersection phases included in the intersection can be obtained.

In addition, for the intersection phases included in the intersection that is obtained through statistics, a corresponding track sequence set is obtained according to the running directions corresponding to the intersection phases. The track sequence set is generated according to the running track data corresponding to the intersection phases.

It should be noted that in obtaining of the intersection phase, counting of the running direction is performed for a same time period, that is, counting of the running direction existing at the intersection in the same time period is performed, so as to guarantee accuracy and validness of the obtained intersection phase.

With the above process, an intersection in a road network and an intersection phase in the intersection are obtained precisely based on a huge volume of running track data, thereby providing a precise data basis for obtaining signal light duration data performed subsequently.

In an embodiment, step 110 further includes matching a track point in the running track data to a given road network, to obtain a track sequence, the track sequence recording a road section identifier and distances between match locations of the track points and a road section starting point.

This process is a pre-process on the input running track data, for simplifying a subsequent operation process and improving processing efficiency.

A piece of running track data includes a running track of a vehicle in a time period and is certainly consistent with a road in a road network. Therefore, the running track data may be matched to a given road network by using a road match algorithm.

A road network consists of road sections and also includes a connection relationship between road sections. Therefore, in an embodiment, for each track point in the running track, that is, for each piece of record in the running track data, a location on a road section in the road network where the track point is located is determined, so as to obtain a corresponding match result.

Match results of all pieces of records in the running track data compose a track sequence. The match result is indicated by a road section identifier (LinkID) and a match location (Pos). A value of the match location is: a value of a distance between an optimal match location of the track point in the road section and the road section starting point.

Therefore, the track sequence composed of the match results is conversion of the running track data. The track sequence constructs an association between the running track data and the road network, so as to guarantee simplicity and accuracy of subsequent processing.

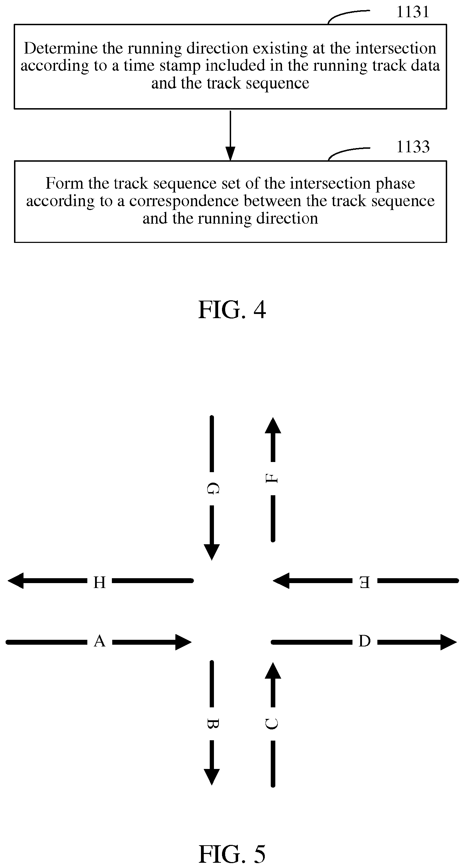

In an embodiment, as shown in FIG. 4, step 113 includes step 1131 and step 1133.

In step 1131, the running direction existing at the intersection is determined according to a time stamp included in the running track data and the track sequence.

In the step, the respective running directions existing at all the intersections in the same time period may be obtained through counting according to the time stamp included in the running track data and the track sequence obtained through the matching, and the respective intersection phases of all the intersections may be obtained according to the running directions.

As described above, each piece of record in the running track data includes the data content of time stamp, and therefore, counting of the running directions of the intersections in the same time period can be performed according to the time stamp and the track sequence in the running track data.

In the road network, succession combinations of different road sections in a track sequence represent different running directions, i.e., traffic flow directions. For example, FIG. 5 shows all road sections connecting to an intersection in a road network. A running direction can be obtained according to a succession combination of two road sections.

That is, the running direction corresponding to A-->D is running straight, the running direction corresponding to C-->H is turning left, and the running direction corresponding to A-->H is turning around.

For a specific intersection, the track sequence representing each running direction is fixed. By performing counting on occurrences of the track sequence in the same time period, the divided intersection phases of the intersection can be determined, and the intersection phase corresponds to an allowed running direction.

In step 1133, the track sequence set of the intersection phase is formed according to a correspondence between the track sequence and the running direction.

In the step, the track sequence set of the intersection phase is formed according to the running direction of the track sequence at the intersection.

Multiple track sequences representing the corresponding intersection phase are obtained according to the running directions corresponding to the track sequences. The obtained multiple track sequences forms a track sequence set of the intersection phase.

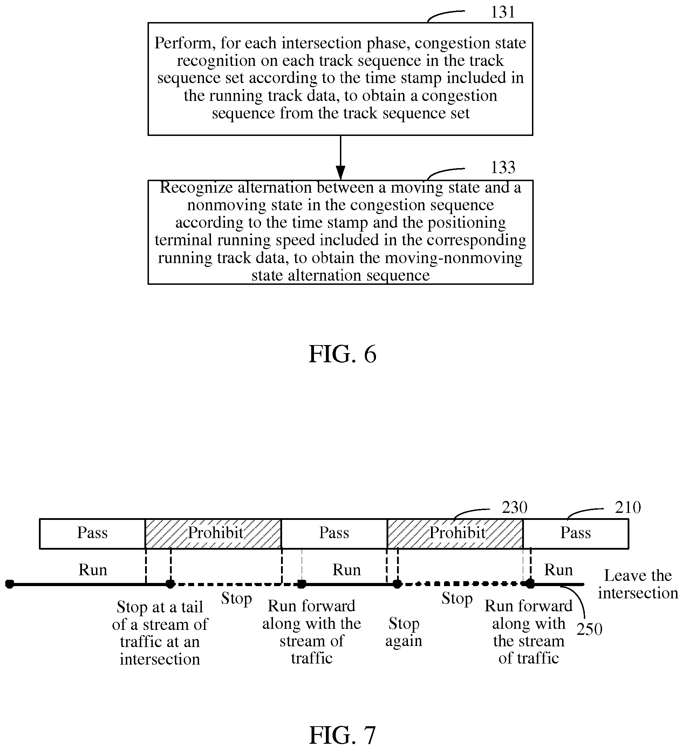

In an embodiment, as shown in FIG. 6, step 130 includes step 131 and step 133.

In step 131, for each intersection phase, congestion state recognition is performed on each track sequence in the track sequence set according to the time stamp included in the running track data, to obtain a congestion sequence from the track sequence set.

As described above, on the basis of the given road network, a divided intersection phase of each intersection is obtained through counting. In the track sequence set of the intersection phase, a match result included in each track sequence corresponds to one piece of record in the corresponding running track data, and the data content included in the record at least includes a time stamp.

That is, in the track sequence included in the track sequence set, a time stamp corresponding to each match result can be obtained according to the corresponding running track data. Therefore, in the track sequence set of the intersection phase, congestion state recognition is performed for each track sequence according to a time stamp corresponding to a match result of the track sequence, so as to recognize a track sequence in a congestion state. The track sequence in the congestion state is a congestion sequence.

By the method, all congestion sequences in the track sequence set can be recognized.

In an embodiment, a determining standard used for performing congestion state recognition according to the time stamp may be that actual passing duration for passing through the intersection is several times, for example, 3 times or above, greater than default passing duration. In an alternative embodiment, if a vehicle corresponding to a track sequence performs a process of running and stopping multiple times, for example, running at least twice and/or stopping at least twice, or running at least three times and/or stopping at least three times, it can be determined that the track sequence is a congestion sequence.

By the above process, screening of the track sequence set is completed, and a track sequence running through an intersection with severe congestion is selected.

In step 133, alternation between a moving state and a nonmoving state in the congestion sequence is recognized according to the time stamp and the positioning terminal running speed included in the corresponding running track data, to obtain the moving-nonmoving state alternation sequence.

The positioning terminal running speed is an instantaneous point speed corresponding to the time stamp. Similar to the time stamp, the instantaneous point speed, as a part of the data content in the running track data, also corresponds to the match result in the track sequence.

After obtaining the congestion sequence corresponding to the intersection phase, a congestion sequence in which the moving state and the nonmoving state appear alternately is recognized according to the time stamp and the instantaneous point speed. The congestion sequence is the moving-nonmoving state alternation sequence.

Specifically, as described above, a congestion sequence corresponds to multiple time stamps and instantaneous point speeds. For each congestion sequence, the congestion sequence is divided into several segments according to the corresponding time stamp and instantaneous point speed, and whether each segment is in the moving state or the nonmoving state is determined. If the moving state and the nonmoving state appear alternately, it is determined that the congestion sequence is the moving-nonmoving state alternation sequence.

In a process in which a vehicle waits for passing an intersection controlled by a signal light, the moving state (that is, the running state of the vehicle) or the nonmoving state (that is, the stopping state of the vehicle) of the vehicle corresponds to a state of whether a current phase allows passing. However, a time boundary of the phase state is not strictly aligned with a time boundary of the moving-nonmoving state of the vehicle. As shown in FIG. 7, there is a delay, and a value of the delay is associated with a distance between the vehicle and the intersection. A short distance to the intersection indicates a small value of the delay, and a long distance to the intersection indicates a large value of the delay. In addition, FIG. 7 also shows that the vehicle goes through multiple times of the moving state (that is, the vehicle runs multiple times) and multiple times of the nonmoving state (that is, the vehicle stops multiple times).

In the relationship between the traffic flow and the phase state shown in FIG. 7, there is a delay between the moving state or nonmoving state of a traffic flow in a road section 250 and a pass state 210 and a prohibit state 230 of the phase state.

In the recognition of the moving state and the nonmoving state performed according to the time stamp and the instantaneous point speed, the moving state has a feature that duration in which successive instantaneous point speeds are continuously 0 is less than a designated threshold. For example, according to experience, the threshold may be set to 10s. The nonmoving state has a feature that instantaneous point speeds of all track points within a time period are all 0.

In an embodiment, step 170 includes obtaining the signal light duration sample value of the intersection phase according to duration and location information of at least one state in the moving-nonmoving state alternation sequence.

After obtaining the moving-nonmoving state alternation sequence through recognition, duration and location information of the moving state may be obtained according to the segments of the moving state and the segments of the nonmoving state that exist alternately in the moving-nonmoving state alternation sequence.

By the process, a large amount of duration and location information of the states can be obtained for the intersection phase, which can be used as samples to construct a model. In addition, the signal light duration sample value of the intersection phase can be obtained by resolving an unknown number in the constructed model.

According to the foregoing description, it can be clearly learned that the duration and location information of the states correspond to the time stamps. Therefore, model construction can be performed according to time periods divided in advance to obtain the signal light duration sample value in different time periods of the intersection phase.

It should be noted that the time period division is performed for the whole day, but is merely a rough division, for example, the time period division may be performed for the whole day according to experience.

By the process, the obtained signal light duration sample value in the intersection phase is obtained based on a moving-nonmoving alternate sequence in the congestion state and is a signal light duration sample value in different time periods of the intersection phase, and therefore can be calculated in a most stable space-time regularity while considering various traffic travelling situations that may appear randomly in the whole day. Therefore, the obtained signal light duration sample value can accurately match an actual traffic travelling situation, having a quite high completeness and accuracy.

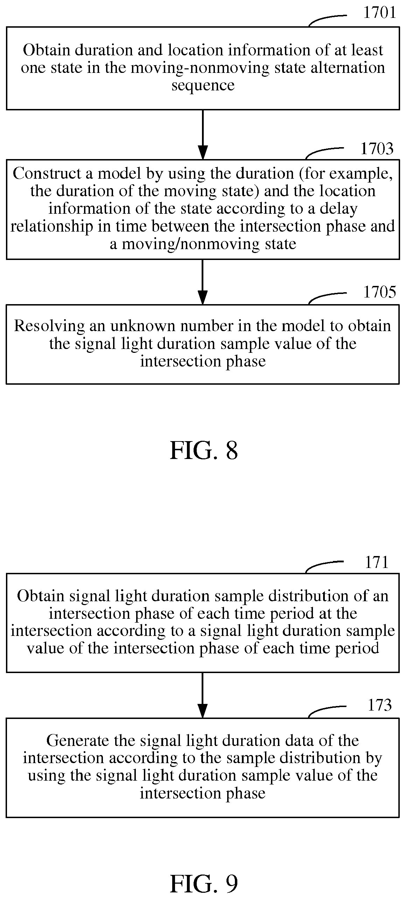

Further, in this embodiment, as shown in FIG. 8, the step of obtaining the signal light duration sample value of the intersection phase according to duration and location information of at least one state in the moving-nonmoving state alternation sequence includes step 1701 to step 1705.

In step 1701, duration and location information of at least one state (for example, the moving state) of the moving-nonmoving state alternation sequence is obtained.

The step may include obtaining, according to the time periods divided in advance, duration and location information of the moving state in the time periods from the moving-nonmoving state alternation sequence.

The location information includes the distance to the intersection when starting and the distance to the intersection when stopping.

In step 1703, a model is constructed by using the duration (for example, the duration of the moving state) and the location information of the state according to a delay relationship in time between the intersection phase and a moving/nonmoving state.

In the embodiments of the present disclosure, a same model may be constructed for different time periods, or different models may be constructed for different time periods.

In an embodiment, the delay relationship in time between the phase state and the moving-nonmoving state may be: Tm = T - L1*a + L2*b, where Tm is duration of a state (for example, duration of the moving state once), T is a signal light duration sample value to be calculated, L1 is the distance to the intersection when starting, L2 is the distance to the intersection when stopping, a is a delay coefficient when starting, and b is a delay coefficient when stopping.

In step 1705, an unknown number in the model is resolved to obtain the signal light duration sample value of the intersection phase.

There are only three unknown numbers in the constructed model, and appropriate values of T, a, and b can be calculated with only 3 or more groups of samples.

In an embodiment, calculation of the unknown numbers can be implemented by least square fitting.

It should be noted that the obtaining a signal light duration sample value is also performed in time periods. That is, the whole day is divided into several time periods of a relatively small interval, to obtain a signal light duration sample value of each time period. For example, the whole day is divided into 48 time periods with a length of 30 min, and multiple signal light duration sample values can be calculated corresponding to each time period.

In an embodiment, as shown in FIG. 9, step 170 includes step 171 and step 173.

In step 171, signal light duration sample distribution of an intersection phase of each time period at the intersection is obtained according to signal light duration sample values of the intersection phase of each time period.

By the foregoing process, a large number of signal light duration sample values in each intersection phase in the intersection are obtained. The time period division corresponding to the signal light duration sample values is performed roughly, and therefore, whether the time period division is appropriate needs to be evaluated by using sample distribution formed by the signal light duration sample values in the intersection phase.

In step 173, the signal light duration data of the intersection is generated according to the sample distribution by using the signal light duration sample value of the intersection phase.

The divided time periods is processed according to the sample distribution for each intersection phase, so as to obtain time division adaptive to the sample distribution.

Further, an average value of the corresponding signal light duration sample values is calculated according to the finally divided time periods, to obtain the signal light duration data of the intersection phase. The signal light duration data of the intersection phase forms the signal light duration data of the intersection.

By the foregoing process, the time periods in the signal light duration data is divided appropriately, to further obtain a signal light time distribution scheme that is consistent with the actual situation.

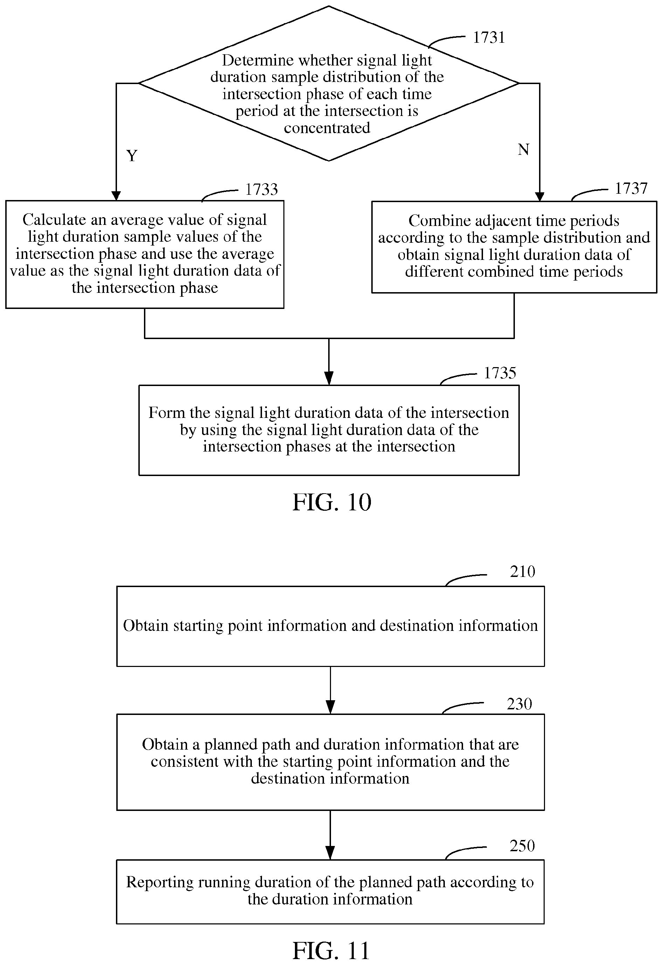

Further, in this embodiment, as shown in FIG. 10, step 173 includes step 1731 to step 1737.

In step 1731, it is determined whether signal light duration sample distribution of the intersection phase of each time period at the intersection is concentrated. In a case of a positive determination, step 1733 is performed. Otherwise, step 1737 is performed.

If the signal light duration sample distribution is concentrated, it indicates that time period division no longer needs to be performed. If the signal light duration sample distribution is not concentrated, the time periods are combined according to proximity of the signal light duration sample values of different time periods, so as to finally obtain a large time period division scheme of the whole day.

In this way, the signal light duration data of the intersection is generated according to the final time period division.

In step 1733, an average value of signal light duration sample values of the intersection phase is calculated and the average value is used as the signal light duration data of the intersection phase.

If it is determined that the signal light duration sample distribution of the divided periods of the intersection phase is concentrated, for example, if a relatively concentrated one-peak normal distribution is presented, it indicates that time period division no longer needs to be performed, and merely a uniform time distribution scheme of the whole day needs to be used.

At this time, an average value of the signal light duration sample values is calculated for each intersection phase, so as to obtain the signal light duration data of the intersection.

In step 1735, the signal light duration data of the intersection is formed by using the signal light duration data of the intersection phases at the intersection.

In step 1537, adjacent time periods is combined according to the signal light duration sample distribution of the intersection phase, and signal light duration data of different combined time periods is obtained.

If it is determined that the signal light duration sample distribution of the divided periods of the intersection phase is not concentrated, for example, if the sample distribution presents an obvious dual-peak or multi-peak normal distribution, the time periods are combined.

Finally, an average value of the signal light duration data for each time period is calculated for the time periods obtained after combination, so as to the signal light duration data in the intersection phase after the time periods are combined.

In addition, a travel service implementation method is further provided correspondingly. As shown in FIG. 11, the method includes step 210 to step 250.

In step 210, starting point information and destination information is obtained.

In step 230, a planned path and duration information that are consistent with the starting point information and the destination information is obtained.

The duration information includes the signal light duration data of the intersection in the planned path, and the signal light duration data is generated by using the method described above.

In step 250, running duration of the planned path is reported according to the duration information.

By the foregoing travel service implementation method, a travel service implemented at the product side can provide precise running duration for the user, so as to provide an accurate and reliable travel service.

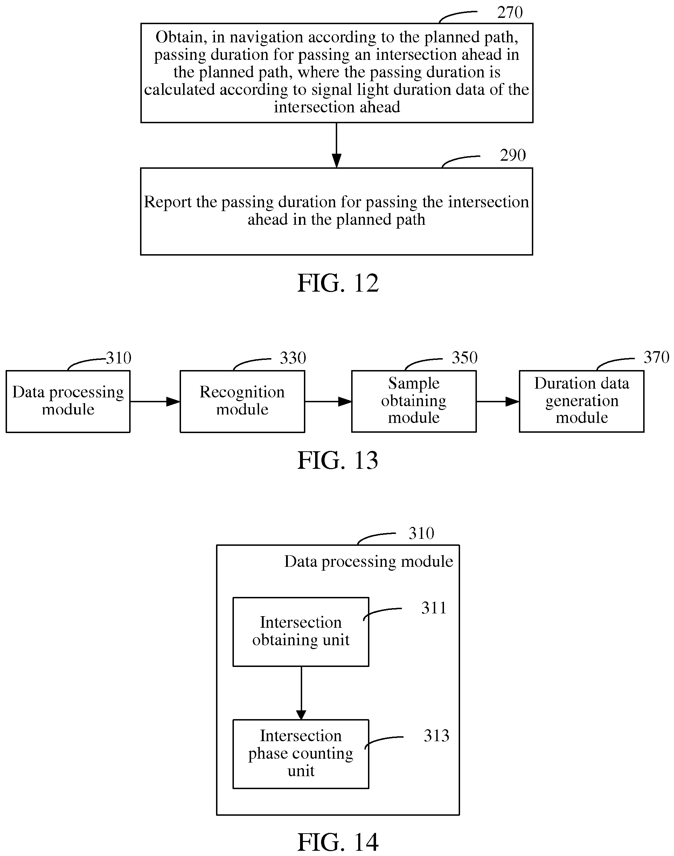

Further, in this embodiment, as shown in FIG. 12, the method further includes step 270 and step 290.

In step 270, in navigation according to the planned path, passing duration for passing an intersection ahead in the planned path is obtained, where the passing duration is calculated according to signal light duration data of the intersection ahead.

Step 290: the passing duration for passing the intersection ahead in the planned path is reported.

By the process, time for running through the intersection ahead by the user can be precisely provided in the travel service, to further guarantee the precise travel service.

In addition, an apparatus for obtaining signal light duration data is also provided. As shown in FIG. 13, the apparatus includes a data processing module 310, a recognition module 330, a sample obtaining module 350, and a duration data generation module 370.

The data processing module 310 is configured to obtain an intersection phase and a track sequence set corresponding to the intersection phase from running track data of a positioning terminal.

The recognition module 330 is configured to obtain a moving-nonmoving state alternation sequence from the track sequence set for each intersection phase.

The sample obtaining module 350 is configured to obtain a signal light duration sample value of the intersection phase based on the moving-nonmoving state alternation sequence.

The duration data generation module 370 is configured to generate signal light duration data according to the signal light duration sample value.

In an embodiment, the moving-nonmoving state alternation sequence is a track sequence in a congestion state.

Obtaining a signal light duration sample value of the intersection phase includes obtaining the signal light duration sample value of the intersection phase for one or more time periods.

Generating signal light duration data according to the signal light duration sample value includes generating signal light duration data of an intersection according to the signal light duration sample value and signal light duration sample distribution.

In an embodiment, the apparatus further includes a recording module. The recording module is configured to obtain and record track points based on positioning performed by the positioning terminal, to obtain running track data of the positioning terminal.

In an embodiment, as shown in FIG. 14, the data processing module 310 includes an intersection obtaining unit 311 and an intersection phase counting unit 313.

The intersection obtaining unit 311 is configured to determine an intersection according to the running track data of the positioning terminal.

The intersection phase counting unit 313 is configured to: determine, based on the running track data, a running direction existing at the intersection, and obtain an intersection phase of the intersection and a track sequence set corresponding to the intersection phase based on the running direction.

In another embodiment, the data processing module 310 further includes a road network matching unit. The road network matching unit is configured to match a track point in the running track data to a given road network, and obtain a track sequence, the track sequence recording a road section identifier and distances between match locations of the track points and a road section starting point.

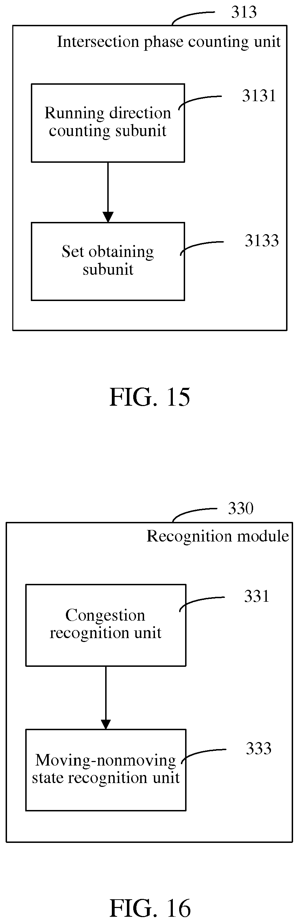

Further, in this embodiment, as shown in FIG. 15, the intersection phase counting unit 313 includes a running direction counting subunit 3131 and a set obtaining subunit3133.

The running direction counting subunit 3131 is configured to determine the running direction existing at the intersection according to a time stamp included in the running track data and the track sequence.

The set obtaining subunit 3133 is configured to form the track sequence set of the intersection phase according to a correspondence between the track sequence and the running direction.

In an embodiment, the running track data includes a time stamp and a positioning terminal running speed corresponding to the time stamp. As shown in FIG. 16, the recognition module 330 includes a congestion recognition unit 331 and a moving-nonmoving state recognition unit 333.

The congestion recognition unit 331 is configured to perform, for each intersection phase, congestion state recognition on each track sequence in the track sequence set according to the time stamp included in the running track data, to obtain a congestion sequence from the track sequence set.

The moving-nonmoving state recognition unit 333 is configured to recognize alternation between a moving state and a nonmoving state in the congestion sequence according to the time stamp and the positioning terminal running speed included in the running track data, to obtain the moving-nonmoving state alternation sequence.

In an embodiment, the sample obtaining module 350 is further configured to obtain the signal light duration sample value of the intersection phase according to duration and location information of at least one state in the moving-nonmoving state alternation sequence.

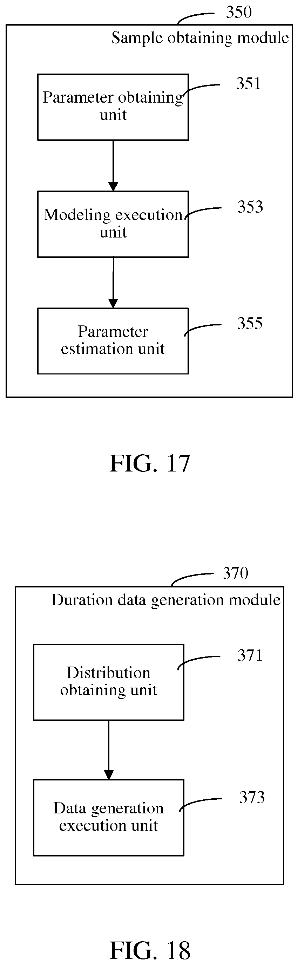

Further, in this embodiment, as shown in FIG. 17, the sample obtaining module 350 includes a parameter obtaining unit 351, a modeling execution unit 353, and a parameter estimation unit 355.

The parameter obtaining unit 351 is configured to obtain duration and location information of a moving state of the moving-nonmoving state alternation sequence.

The modeling execution unit 353 is configured to construct a model by using the duration and location information of the moving state according to a delay relationship in time between the intersection phase and a moving/nonmoving state.

The parameter estimation unit 355 is configured to resolving an unknown number in the model to obtain the signal light duration sample value of the intersection phase.

In an embodiment, as shown in FIG. 18, the duration data generation module 370 includes a distribution obtaining unit 371 and a data generation execution unit 373.

The distribution obtaining unit 371 is configured to obtain the signal light duration sample distribution of an intersection phase of each time period at the intersection according to the signal light duration sample value of the intersection phase of each time period.

The data generation execution unit 373 is configured to generate the signal light duration data of the intersection according to the sample distribution by using the signal light duration sample value of the intersection phase.

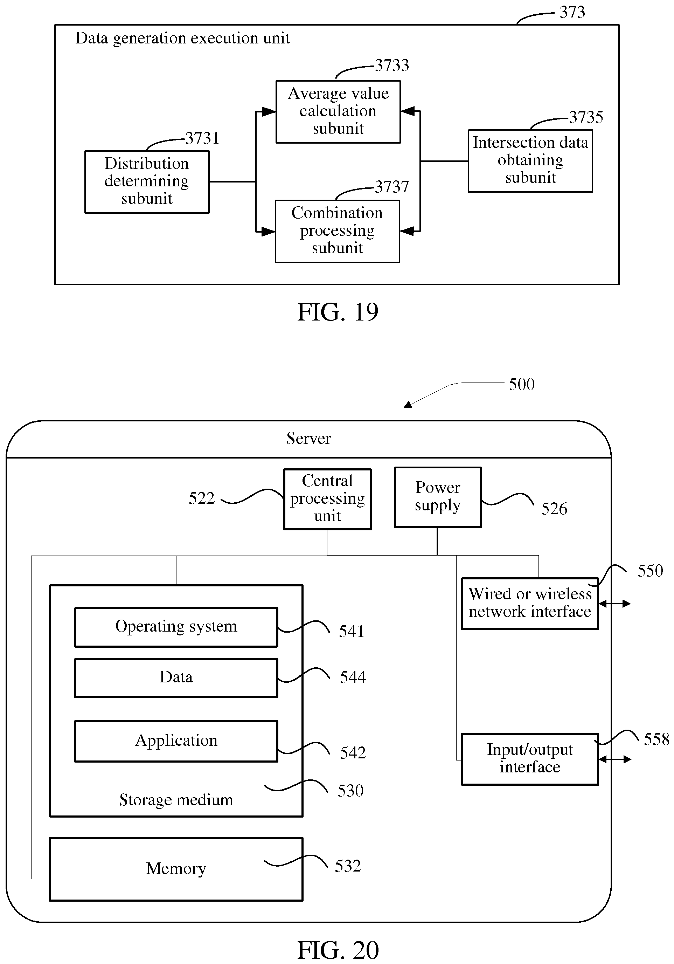

Further, in this embodiment, as shown in FIG. 19, the data generation execution unit 373includes a distribution determining subunit 3731, an average value calculation subunit 3733, an intersection data obtaining subunit 3735, and a combination processing subunit 3737.

The distribution determining subunit 3731 is configured to: determine whether signal light duration sample distribution of the intersection phase of each time period at the intersection is concentrated, and in a case of a positive determination, notify the average value calculation subunit 3733, and if not, notify the combination processing subunit 3737.

The average value calculation subunit 3733 is configured to calculate an average value of signal light duration sample values of the intersection phase and use the average value as the signal light duration data of the intersection phase.

The intersection data obtaining subunit 3735 is configured to form the signal light duration data of the intersection by using signal light duration data of all intersection phases at the intersection.

The combination processing subunit 3737 is configured to combine adjacent time periods according to the sample distribution and obtain signal light duration data of different combined time periods.

FIG. 20 shows a structure of a calculation apparatus 500 according to an embodiment of the present disclosure. One example of the calculation apparatus is a server. The server 500 may have different configurations or performance, and may include one or more central processing units (CPU) 510 (for example, one or more processors) and a memory 520, and one or more storage media 530 (for example, one or more mass storage devices) that store applications 531 or data 533. The memory 520 and the storage medium 530 may be transient or persistent storages. The program stored in the storage medium 530 may include one or more modules (not shown in the figure), and each module may include a series of instructions and operations for the server. Still further, the central processing unit 510 may be configured to communicate with the storage medium 530, and perform, on the server 500, a series of instructions and operations in the storage medium 530. The server 500 may further include one or more power supplies 550, one or more wired or wireless network interfaces 570, one or more input/output interfaces 580, and/or one or more operating systems 535, such as the Windows Server^{™}, Mac OS X^{™}, Unix^{™}, Linux^{™}, or FreeBSD^{™}.

In addition, the present disclosure can also be implemented by a hardware circuit or a hardware circuit in combination with software instructions. Therefore, the present disclosure is not limited to any specific hardware circuit, software, or a combination of the hardware circuit and software.

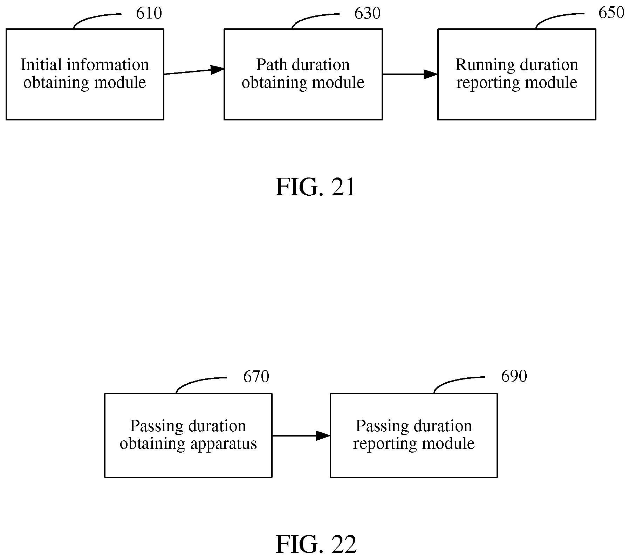

In another embodiment, as shown in FIG. 21, a travel service implementation apparatus includes: an initial information obtaining module 610, a path duration obtaining module 630, and a running duration reporting module 650.

The initial information obtaining module 610 is configured to obtain starting point information and destination information.

The path duration obtaining module 630 is configured to obtain a planned path and duration information that are consistent with the starting point information and the destination information, the duration information including signal light duration data of an intersection on the planned path, and the signal light duration data being generated by the apparatus for digging the signal light duration data as described above.

The running duration reporting module 650 is configured to report running duration of the planned path according to the duration information.

Further, in this embodiment, as shown in FIG. 22, the apparatus further includes a passing duration obtaining apparatus 670 and a passing duration reporting module 690, where:

The passing duration obtaining module 670 is configured to obtain, in navigation according to the planned path, passing duration for passing an intersection ahead in the planned path, where the passing duration is calculated according to signal light duration data of the intersection ahead.

The passing duration reporting module 690 is configured to report the passing duration for passing the intersection ahead in the planned path.

A person of ordinary skill in the art may understand that all or some of the steps of the foregoing embodiments may be implemented by using hardware, or may be implemented by a program instructing relevant hardware. The program may be stored in a computer readable storage medium. The storage medium may be a read-only memory, a magnetic disk, an optical disc, or the like.

## Claims

1. A method for obtaining signal light duration data, comprising:
obtaining (110) an intersection phase and a track sequence set corresponding to the intersection phase from running track data of a plurality of positioning terminals, wherein each positioning terminal provides running track data corresponding to a vehicle or a portable mobile terminal on a road network intersection to which the intersection phase belongs and the track sequence set includes multiple track sequences that are obtained from the running track data corresponding to the intersection phase, wherein the running track data corresponding to the intersection phase is running track data from the multiple positioning terminals in which a corresponding running track enters the road network intersection and has a running direction consistent with a running direction allowed in the intersection phase;
recognizing, from the track sequence set, multiple track sequences in which a congestion state exists, wherein the existence of the congestion state is recognized if according to a time stamp comprised in the running track data the actual passing duration for passing the road network intersection is multiple times greater than a default passing duration or if a vehicle or portable terminal corresponding to a track sequence performs a process of running and stopping multiple times;
obtaining (130) a moving-nonmoving state alternation sequence from the multiple track sequences in which the congestion state exists, wherein the moving-nonmoving state alternation sequence is a track sequence in which the congestion state exists;
obtaining (150) a signal light duration sample value of the intersection phase based on the moving-nonmoving state alternation sequence; and
generating (170) the signal light duration data according to the signal light duration sample value.

2. The method according to claim 1, wherein the step of obtaining the intersection phase and the track sequence set corresponding to the intersection phase from the running track data of the positioning terminals comprises:
determining (111) the road network intersection according to the running track data of the positioning terminals;
determining (113), based on the running track data, one or more running directions existing at the intersection; and
obtaining (113) the intersection phase of the road network intersection and the track sequence set corresponding to the intersection phase based on the running directions.

3. The method according to claim 2, further comprising:
obtaining a plurality of track points based on positioning performed by the positioning terminals, wherein
the step of obtaining the intersection phase and the track sequence set corresponding to the intersection phase from the running track data of the positioning terminals further comprises:
matching the track points to a road section of the road network, to obtain track sequences, wherein the track sequences comprise a road section identifier and distances between locations of the track points in the road section and a road section starting point.

4. The method according to claim 3, wherein
the step of determining, based on the running track data, the running directions existing at the road network intersection comprises:
determining (1131) the running directions existing at the road network intersection according to a time stamp comprised in the running track data and the track sequence; and
the obtaining the intersection phase of the road network intersection and the track sequence set corresponding to the intersection phase based on the running directions comprises:
forming (1133) the track sequence set of the intersection phase according to a correspondence between the track sequences and the running directions.

5. The method according to claim 1, wherein the running track data comprises a time stamp and a positioning terminal running speed corresponding to the time stamp, wherein
the step of obtaining a moving-nonmoving state alternation sequence from the track sequence set for the intersection phase comprises:
performing (131), for the intersection phase, congestion state recognition on each track sequence in the track sequence set according to the time stamps comprised in the running track data, to obtain congestion sequences from the track sequence set; and
recognizing (133) alternation between a moving state and a nonmoving state in the congestion sequences according to the time stamp and the positioning terminal running speed comprised in the running track data, to obtain the moving-nonmoving state alternation sequence.

6. The method according to claim 1, wherein the step of obtaining the signal light duration sample value of the intersection phase based on the moving-nonmoving state alternation sequence comprises:
obtaining the signal light duration sample value of the intersection phase according to duration and location information of at least one state in the moving-nonmoving state alternation sequence.

7. The method according to claim 6, wherein the step of obtaining the signal light duration sample value of the intersection phase according to the duration and location information of the at least one state in the moving-nonmoving state alternation sequence comprises:
obtaining (1701) duration and location information of a moving state of the moving-nonmoving state alternation sequence;
constructing (1703) a model by using the duration and location information of the moving state according to a delay relationship in time between the intersection phase and a moving/nonmoving state; and
resolving (1705) an unknown number in the model to obtain the signal light duration sample value of the intersection phase.

8. The method according to claim 1, wherein the step of generating the signal light duration data according to the signal light duration sample value comprises:
obtaining (171) a signal light duration sample distribution of an intersection phase of each time period at the road network intersection according to the signal light duration sample value of the intersection phase of each time period; and
generating (173) the signal light duration data of the road network intersection according to the sample distribution by using the signal light duration sample value of the intersection phase.

9. The method according to claim 8, wherein the step of generating the signal light duration data of the road network intersection according to the sample distribution by using the signal light duration sample value of the intersection phase comprises:
determining (1731) whether the signal light duration sample distribution of the intersection phase of each time period at the intersection is concentrated, and in a case of a positive determination,
calculating (1733) an average value of signal light duration sample values of the intersection phase as the signal light duration data of the intersection phase, wherein the signal light duration data of all intersection phases at the road network intersection forms the signal light duration data of the road network intersection.

10. The method according to claim 9, wherein
the step of generating the signal light duration data of the road network intersection according to the sample distribution by using the signal light duration sample value of the intersection phase further comprises:
combining (1737) adjacent time periods according to the sample distribution if it is determined that the signal light duration sample distribution of the intersection phase of each time period at the road network intersection is not concentrated.

11. A travel service implementation method, comprising:
obtaining (210) starting point information and destination information;
obtaining (230) a planned path and duration information that are consistent with the starting point information and the destination information, the duration information comprising signal light duration data of a road network intersection on the planned path, and the signal light duration data being generated by using the method according to any one of claims 1 to 10; and
reporting (250) a running duration of the planned path according to the duration information.

12. The method according to claim 11, further comprising:
obtaining (270), in navigation according to the planned path, a passing duration for passing the road network intersection ahead in the planned path, wherein the passing duration is calculated according to signal light duration data of the road network intersection ahead; and
reporting (290) the passing duration for passing the road network intersection ahead in the planned path.

13. An apparatus for obtaining signal light duration data, comprising:
a data processing module (310), configured to obtain an intersection phase and a track sequence set corresponding to the intersection phase from running track data of a plurality of positioning terminals, wherein each positioning terminal provides running track data corresponding to a vehicle or a portable mobile terminal on a road network intersection to which the intersection phase belongs and the track sequence set includes multiple track sequences that are obtained from the running track data corresponding to the intersection phase, wherein the running track data corresponding to the intersection phase is running track data from the multiple positioning terminals in which a corresponding running track enters the road network intersection and has a running direction consistent with a running direction allowed in the intersection phase;
a recognition module (330), configured to recognize, from the track sequence set, multiple track sequences in which a congestion state exists, wherein the existence of the congestion state is recognized if according to a time stamp comprised in the running track data the actual passing duration for passing the road network intersection is multiple times greater than a default passing duration or if a vehicle or portable terminal corresponding to a track sequence performs a process of running and stopping multiple times and to obtain a moving-nonmoving state alternation sequence from the mutiple track sequences in which the congestion state exists, wherein the moving-nonmoving state alternation sequence is a track sequence in which the congestion state exists;
a sample obtaining module (350), configured to obtain a signal light duration sample value of the intersection phase based on the moving-nonmoving state alternation sequence; and
a duration data generation module (370), configured to generate the signal light duration data according to the signal light duration sample value.

14. A travel service implementation apparatus, comprising:
an initial information obtaining module (610), configured to obtain starting point information and destination information;
a path duration obtaining module (630), configured to obtain a planned path and duration information that are consistent with the starting point information and the destination information, the duration information comprising signal light duration data of a road network intersection on the planned path, and the signal light duration data being generated by the apparatus according to claim 13; and
a running duration reporting module (650), configured to report a running duration of the planned path according to the duration information.

## Patentansprüche

1. Verfahren zum Erhalten von Signallichtdauerdaten, umfassend:
Erhalten (110) einer Kreuzungsphase und eines Spursequenzsatzes, der zu der Kreuzungsphase korrespondiert, aus Fahrspurdaten einer Vielzahl von Positionierungsendgeräten, wobei jedes Positionierungsendgerät Fahrspurdaten bereitstellt, die zu einem Fahrzeug oder einem tragbaren mobilen Endgerät auf einer Straßennetzkreuzung, zu der die Kreuzungsphase gehört, korrespondieren, und der Spursequenzsatz mehrere Spursequenzen enthält, die aus den Fahrspurdaten, die zu der Kreuzungsphase korrespondieren, erhalten werden, wobei die Fahrspurdaten, die zu der Kreuzungsphase korrespondieren, Fahrspurdaten von den mehreren Positionierungsendgeräten sind, bei denen eine korrespondierende Fahrspur in die Straßennetzkreuzung einfährt und eine Fahrrichtung aufweist, die mit einer in der Kreuzungsphase zulässigen Fahrrichtung übereinstimmt;
Erkennen, aus dem Spursequenzsatz, von mehreren Spursequenzen, in denen ein Stauzustand existiert, wobei die Existenz des Stauzustandes erkannt wird, wenn gemäß einem in den Fahrspurdaten enthaltenen Zeitstempel die tatsächliche Durchfahrtsdauer für das Durchfahren der Straßennetzkreuzung mehrfach größer ist als eine Default-Durchfahrtsdauer oder wenn ein Fahrzeug oder tragbares Endgerät, das zu einer Spursequenz korrespondiert, mehrfach einen Fahr- und Haltevorgang ausführt;
Erhalten (130) einer Wechselsequenz von sich bewegenden und sich nicht bewegenden Zuständen aus den mehreren Spursequenzen, in denen der Stauzustand existiert, wobei die Wechselsequenz von sich bewegenden und sich nicht bewegenden Zuständen eine Spursequenz ist, in der der Stauzustand existiert;
Erhalten (150) eines Signallichtdauer-Abtastwerts der Kreuzungsphase auf der Grundlage der Wechselsequenz von sich bewegenden und sich nicht bewegenden Zuständen; und
Erzeugen (170) der Signallichtdauerdaten gemäß dem Signallichtdauer-Abtastwert.

2. Verfahren nach Anspruch 1, wobei der Schritt des Erhaltens der Kreuzungsphase und des Spursequenzsatzes, der zu der Kreuzungsphase korrespondiert, aus den Fahrspurdaten der Positionierungsendgeräte umfasst:
Bestimmen (111) der Straßennetzkreuzung gemäß den Fahrspurdaten der Positionierungsendgeräte;
Bestimmen (113), basierend auf den Fahrspurdaten, einer oder mehrerer Fahrrichtungen, die an der Kreuzung existieren; und
Erhalten (113) der Kreuzungsphase der Straßennetzkreuzung und des Spursequenzsatzes, der zu der Kreuzungsphase korrespondiert, auf der Grundlage der Fahrtrichtungen.

3. Verfahren nach Anspruch 2, des Weiteren umfassend:
Erhalten einer Mehrzahl von Spurpunkten auf der Grundlage der Positionierung, die von den Positionierungsendgeräten durchgeführt wird, wobei
der Schritt des Erhaltens der Kreuzungsphase und des Spursequenzsatzes, der zu der Kreuzungsphase korrespondiert, aus den Fahrspurdaten der Positionierungsendgeräte des Weiteren umfasst:
Zuordnen der Spurpunkte zu einem Straßenabschnitt des Straßennetzes, um Spursequenzen zu erhalten, wobei die Spursequenzen einen Straßenabschnitt-Identifikator und Abstände zwischen Orten der Spurpunkte in dem Straßenabschnitt und einem Straßenabschnittsstartpunkt umfassen.

4. Verfahren nach Anspruch 3, wobei
der Schritt des Bestimmens, auf der Grundlage der Fahrspurdaten, der Fahrtrichtungen, die an der Straßennetzkreuzung existieren, umfasst:
Bestimmen (1131) der Fahrtrichtungen, die an der Straßennetzkreuzung existieren, gemäß einem Zeitstempel, der in den Fahrspurdaten enthalten ist, und der Spursequenz; und
das Erhalten der Kreuzungsphase der Straßennetzkreuzung und Fahrsequenzsatzes, der zu der Kreuzungsphase korrespondiert, auf der Grundlage der Fahrtrichtungen umfasst:
Bilden (1133) des Spursequenzsatzes der Kreuzungsphase gemäß einer Korrespondenz zwischen den Spursequenzen und den Fahrtrichtungen.

5. Verfahren nach Anspruch 1, wobei die Fahrspurdaten einen Zeitstempel und eine Fahrgeschwindigkeit des Positionierungsendgerätes, die zu dem Zeitstempel korrespondiert, umfassen, wobei
der Schritt des Erhaltens einer Wechselsequenz von sich bewegenden und sich nicht bewegenden Zuständen aus dem Spursequenzsatz für die Kreuzungsphase umfasst:
Durchführen (131), für die Kreuzungsphase, einer Stauzustandserkennung an jeder Spursequenz in dem Spursequenzsatz gemäß den Zeitstempeln, die in den Fahrspurdaten enthalten sind, um Stausequenzen aus dem Spursequenzsatz zu erhalten; und
Erkennen (133) des Wechsels zwischen einem sich bewegenden Zustand und einem sich nicht bewegenden Zustand in den Stausequenzen gemäß dem Zeitstempel und der Fahrgeschwindigkeit des Positionierungsendgerätes, die in den Fahrspurdaten enthalten sind, um die Wechselsequenz zwischen den sich bewegenden und den sich nicht bewegenden Zuständen zu erhalten.

6. Verfahren nach Anspruch 1, wobei der Schritt des Erhaltens des Signallichtdauer-Abtastwerts der Kreuzungsphase auf der Grundlage der Wechselsequenz von sich bewegenden und sich nicht bewegenden Zuständen umfasst:
Erhalten des Signallichtdauer-Abtastwerts der Kreuzungsphase gemäß einer Dauer- und Ortsinformation von mindestens einem Zustand in der Wechselsequenz von sich bewegenden und sich nicht bewegenden Zuständen.

7. Verfahren nach Anspruch 6, wobei der Schritt des Erhaltens des Signallichtdauer-Abtastwerts der Kreuzungsphase gemäß der Dauer- und Ortsinformation des mindestens einen Zustands in der Wechselsequenz von sich bewegenden und sich nicht bewegenden Zuständen umfasst:
Erhalten (1701) einer Dauer- und Ortsinformation eines sich bewegenden Zustands der Wechselsequenz von sich bewegenden und nicht sich bewegenden Zuständen;
Konstruieren (1703) eines Modells unter Verwendung der Dauer- und Ortsinformation des sich bewegenden Zustands gemäß einer zeitlichen Verzögerungsbeziehung zwischen der Kreuzungsphase und einem sich bewegenden / sich nicht bewegenden Zustand; und
Auflösen (1705) einer unbekannten Zahl in dem Modell, um den Signallichtdauer-Abtastwert der Kreuzungsphase zu erhalten.

8. Verfahren nach Anspruch 1, wobei der Schritt des Erzeugens der Signallichtdauerdaten gemäß dem Signallichtdauer-Abtastwertwert umfasst:
Erhalten (171) einer Signallichtdauer-Abtastwertverteilung einer Kreuzungsphase von jeder Zeitperiode an der Straßennetzkreuzung gemäß dem Signallichtdauer-Abtastwert der Kreuzungsphase von jeder Zeitperiode; und
Erzeugen (173) der Lichtsignaldauerdaten der Straßennetzkreuzung gemäß der Abtastwertverteilung unter Verwendung des Lichtsignaldauer-Abtastwertes der Kreuzungsphase.

9. Verfahren nach Anspruch 8, wobei der Schritt des Erzeugens der Lichtsignaldauerdaten der Straßennetzkreuzung gemäß der Abtastwertverteilung unter Verwendung des Lichtsignaldauer-Abtastwertes der Kreuzungsphase umfasst:
Bestimmen (1731), ob die Signallichtdauer-Abtastwertverteilung der Kreuzungsphase von jeder Zeitperiode an der Kreuzung konzentriert ist, und im Falle einer positiven Bestimmung,
Berechnen (1733) eines Durchschnittswerts von Signallichtdauer-Abtastwerten der Kreuzungsphase als die Signallichtdauerdaten der Kreuzungsphase, wobei die Signallichtdauerdaten von allen Kreuzungsphasen an der Straßennetzkreuzung die Signallichtdauerdaten der Straßennetzkreuzung bilden.

10. Verfahren nach Anspruch 9, wobei
der Schritt des Erzeugens der Lichtsignaldauerdaten der Straßennetzkreuzung gemäß der Abtastwertverteilung unter Verwendung des Lichtsignaldauer-Abtastwertwerts der Kreuzungsphase des Weiteren umfasst:
Kombinieren (1737) benachbarter Zeiträume gemäß der Abtastwertverteilung, wenn festgestellt wird, dass die Signallichtdauer-Abtastwertverteilung der Kreuzungsphase von jedem Zeitraum an der Straßennetzkreuzung nicht konzentriert ist.

11. Verfahren zum Implementieren von Reisedienstleistungen, umfassend:
Erhalten (210) einer Startpunkt-Information und einer Ziel-Information;
Erhalten (230) eines geplanten Weges und einer Dauerinformation, die mit der Startpunkt-Information und der Ziel-Information übereinstimmen, wobei die Dauerinformation Lichtsignaldauerdaten einer Straßennetzkreuzung auf dem geplanten Weg umfassen und die Lichtsignaldauerdaten durch Verwendung des Verfahrens nach einem der Ansprüche 1 bis 10 erzeugt werden; und
Berichten (250) einer Fahrtdauer für die geplante Strecke gemäß der Dauerinformation.

12. Verfahren nach Anspruch 11, des Weiteren umfassend:
Erhalten (270), bei der Navigation gemäß dem geplanten Weg, einer Durchfahrtsdauer zum Durchfahren der Straßennetzkreuzung, die auf dem geplanten Weg vorausliegt, wobei die Durchfahrtsdauer gemäß den Signallichtdauerdaten der vorausliegenden Straßennetzkreuzung berechnet wird; und
Berichten (290) der Durchfahrtsdauer für das Durchfahren der Straßennetzkreuzung, die auf dem geplanten Weg voraus liegt.

13. Vorrichtung zum Erhalten von Signallichtdauerdaten, umfassend:
ein Datenverarbeitungsmodul (310), das konfiguriert ist zum Erhalten einer Kreuzungsphase und eines Spursequenzsatzes, der zu der Kreuzungsphase korrespondiert, aus Fahrspurdaten einer Vielzahl von Positionierungsendgeräten, wobei jedes Positionierungsendgerät Fahrspurdaten bereitstellt, die zu einem Fahrzeug oder einem tragbaren mobilen Endgerät auf einer Straßennetzkreuzung, zu der die Kreuzungsphase gehört, korrespondieren, und der Spursequenzsatz mehrere Spursequenzen enthält, die aus den Fahrspurdaten, die zu der Kreuzungsphase korrespondieren, erhalten werden, wobei die Fahrspurdaten, die zu der Kreuzungsphase korrespondieren, Fahrspurdaten von den mehreren Positionierungsendgeräten sind, bei denen eine korrespondierende Fahrspur in die Straßennetzkreuzung einfährt und eine Fahrrichtung aufweist, die mit einer in der Kreuzungsphase zulässigen Fahrrichtung übereinstimmt;
ein Erkennungsmodul (330), das konfiguriert ist zum Erkennen, aus dem Spursequenzsatz, von mehreren Spursequenzen, in denen ein Stauzustand existiert, wobei die Existenz des Stauzustandes erkannt wird, wenn gemäß einem in den Fahrspurdaten enthaltenen Zeitstempel die tatsächliche Durchfahrtsdauer für das Durchfahren der Straßennetzkreuzung mehrfach größer ist als eine Default-Durchfahrtsdauer oder wenn ein Fahrzeug oder tragbares Endgerät, das zu einer Spursequenz korrespondiert, mehrfach einen Fahr- und Haltevorgang ausführt, und zum Erhalten einer Wechselsequenz von sich bewegenden und sich nicht bewegenden Zuständen aus den mehreren Spursequenzen, in denen der Stauzustand existiert, wobei die Wechselsequenz von sich bewegenden und sich nicht bewegenden Zuständen eine Spursequenz ist, in der der Stauzustand existiert;
ein Abtastwert-Erhaltemodul (350), das konfiguriert ist zum Erhalten eines Signallichtdauer-Abtastwerts der Kreuzungsphase auf der Grundlage der Wechselsequenz von sich bewegenden und sich nicht bewegenden Zuständen; und
ein Dauerdaten-Erzeugungsmodul (370), das konfiguriert ist zum Erzeugen der Signallichtdauerdaten gemäß dem Signallichtdauer-Abtastwert.

14. Vorrichtung zur Durchführung von Reisedienstleistungen, die Folgendes umfasst:
ein Modul (610) zum Erhalten von Ausgangsinformationen, das konfiguriert ist zum Erhalten einer Startpunkt-Information und einer Ziel-Information;
ein Wegdauererhaltemodul (630), das konfiguriert ist zum Erhalten eines geplanten Weges und einer Dauerinformation, die mit der Startpunkt-Information und der Ziel-Information übereinstimmen, wobei die Dauerinformation Lichtsignaldauerdaten einer Straßennetzkreuzung auf dem geplanten Weg umfassen und die Lichtsignaldauerdaten von der Vorrichtung des Anspruchs 13 erzeugt werden; und
ein Fahrtdauer-Berichtsmodul (650), das konfiguriert ist zum Berichten einer Fahrtdauer für die geplante Strecke gemäß der Dauerinformation.

## Revendications

1. Procédé d'obtention de données de durée de feu de signalisation, comprenant:
obtenir (110) une phase d'intersection et un ensemble de séquences de voies correspondant à la phase d'intersection à partir de données de voie de circulation d'une pluralité de terminaux de positionnement, dans lequel chaque terminal de positionnement fournit des données de voie de circulation correspondant à un véhicule ou à un terminal mobile portable sur une intersection de réseau routier à laquelle appartient la phase d'intersection, et l'ensemble de séquences de voies comprend de multiples séquences de voies qui sont obtenues à partir des données de voies de circulation correspondant à la phase d'intersection, dans lequel les données de voies de circulation correspondant à la phase d'intersection sont des données de voies de circulation provenant des multiples terminaux de positionnement dans lesquels une voie de circulation correspondante entre dans l'intersection de réseau routier et présente une direction de circulation qui concorde avec une direction de circulation autorisée dans la phase d'intersection;
reconnaître, à partir de l'ensemble de séquences de voies, de multiples séquences de voies dans lesquelles existe un état d'embouteillage, dans lequel l'existence de l'état d'embouteillage est reconnue si, selon un horodatage compris dans les données de voie de circulation, la durée de passage réelle pour passer l'intersection de réseau routier est plusieurs fois supérieure à une durée de passage par défaut ou si un véhicule ou un terminal portable correspondant à une séquence de voies effectue plusieurs fois une opération de circulation et d'arrêt;
obtenir (130) une séquence d'alternance d'états mobiles-immobiles à partir des multiples séquences de voies dans lesquelles l'état d'embouteillage existe, dans lequel la séquence d'alternance d'états mobiles-immobiles est une séquence de voies dans laquelle l'état d'embouteillage existe;
obtenir (150) une valeur d'échantillon de durée de feu de signalisation de la phase d'intersection sur la base de la séquence d'alternance d'états mobiles-immobiles; et
générer (170) les données de durée de feu de signalisation en fonction de la valeur d'échantillon de durée de feu de signalisation.

2. Procédé selon la revendication 1, dans lequel l'étape d'obtention de la phase d'intersection et de l'ensemble de séquences de voies correspondant à la phase d'intersection à partir des données de voie de circulation des terminaux de positionnement comprend:
déterminer (111) l'intersection de réseau routier en fonction des données de voie de circulation des terminaux de positionnement ;
déterminer (113), sur la base des données de voie de circulation, une ou plusieurs directions de circulation existant à l'intersection ; et
obtenir (113) la phase d'intersection de l'intersection de réseau routier et de l'ensemble de séquences de voies correspondant à la phase d'intersection, sur la base des directions de circulation.

3. Procédé selon la revendication 2, comprenant en outre:
obtenir une pluralité de points de voie sur la base du positionnement effectué par les terminaux de positionnement, dans lequel
l'étape d'obtention de la phase d'intersection et de l'ensemble de séquences de voies correspondant à la phase d'intersection, à partir des données de voie de circulation des terminaux de positionnement comprend en outre :
faire correspondre les points de voie à une section routière du réseau routier pour obtenir des séquences de voies, dans lequel les séquences de voies comprennent un identifiant de section routière et des distances entre des emplacements des points de voie dans la section routière et un point de départ de section routière.

4. Procédé selon la revendication 3, dans lequel
l'étape consistant à déterminer, sur la base des données de voie de circulation, les directions de circulation existant à l'intersection de réseau routier comprend :
déterminer (1131) les directions de circulation existant à l'intersection de réseau routier, en fonction d'un horodatage compris dans les données de voie de circulation et de la séquence de voie ; et
l'obtention de la phase d'intersection de l'intersection de réseau routier et de l'ensemble de séquences de voies correspondant à la phase d'intersection, sur la base des directions de circulation comprend :
former (1133) l'ensemble de séquences de voies de la phase d'intersection selon une correspondance entre les séquences de voies et les directions de circulation.

5. Procédé selon la revendication 1, dans lequel les données de voie de circulation comprennent un horodatage et une vitesse de circulation de terminal de positionnement correspondant à l'horodatage, dans lequel
l'étape d'obtention d'une séquence d'alternance d'états mobiles-immobiles à partir de l'ensemble de séquences de voies définie pour la phase d'intersection comprend :
effectuer (131), pour la phase d'intersection, une reconnaissance d'état d'embouteillage sur chaque séquence de voies dans l'ensemble de séquences de voies en fonction des horodatages compris dans les données de voie de circulation, pour obtenir des séquences d'embouteillage à partir de l'ensemble de séquences de voies ; et
reconnaître (133) une alternance entre un état mobile et un état immobile dans les séquences d'embouteillage en fonction de l'horodatage et de la vitesse de circulation de terminal de positionnement compris dans les données de voie de circulation, pour obtenir la séquence d'alternance d'états mobiles-immobiles.

6. Procédé selon la revendication 1, dans lequel l'étape d'obtention de la valeur d'échantillon de durée de feu de signalisation de la phase d'intersection sur la base de la séquence d'alternance d'états mobiles-immobiles comprend :
obtenir la valeur d'échantillon de durée de feu de signalisation de la phase d'intersection en fonction d'une information de durée et d'emplacement d'au moins un état dans la séquence d'alternance d'états mobiles-immobiles.

7. Procédé selon la revendication 6, dans lequel l'étape d'obtention de la valeur d'échantillon de durée de feu de signalisation de la phase d'intersection en fonction de l'information de durée et d'emplacement dudit au moins un état dans la séquence d'alternance d'états mobiles-immobiles comprend :
obtenir (1701) de l'information de durée et d'emplacement d'un état mobile de la séquence d'alternance d'états mobiles-immobiles ;
construire (1703) un modèle en utilisant l'information de durée et d'emplacement de l'état mobile selon une relation de retard dans le temps entre la phase d'intersection et un état mobile/immobile; et
résoudre (1705) un nombre inconnu dans le modèle pour obtenir la valeur d'échantillon de durée de feu de signalisation de la phase d'intersection.

8. Procédé selon la revendication 1, dans lequel l'étape de génération des données de durée de feu de signalisation en fonction de la valeur d'échantillon de durée de feu de signalisation comprend :
obtenir (171) une distribution d'échantillon de durée de feu de signalisation d'une phase d'intersection de chaque période de temps à l'intersection de réseau routier en fonction de la valeur d'échantillon de durée de feu de signalisation de la phase d'intersection de chaque période de temps ; et
générer (173) les données de durée de feu de signalisation de l'intersection de réseau routier selon la distribution d'échantillon en utilisant la valeur d'échantillon de durée de feu de signalisation de la phase d'intersection.

9. Procédé selon la revendication 8, dans lequel l'étape de génération des données de durée de feu de signalisation de l'intersection de réseau routier en fonction de la distribution d'échantillon en utilisant la valeur d'échantillon de durée de feu de signalisation de la phase d'intersection comprend :
déterminer (1731) si la distribution d'échantillon de durée de feu de signalisation de la phase d'intersection de chaque période de temps à l'intersection est concentrée, et dans un cas d'une détermination positive,
calculer (1733) une valeur moyenne de valeurs d'échantillon de durée de feu de signalisation de la phase d'intersection en tant que données de durée de feu de signalisation de la phase d'intersection, dans lequel les données de durée de feu de signalisation de toutes les phases d'intersection à l'intersection de réseau routier forment les données de durée de feu de signalisation de l'intersection de réseau routier.

10. Procédé selon la revendication 9, dans lequel
l'étape de génération des données de durée de feu de signalisation de l'intersection de réseau routier selon la distribution d'échantillon en utilisant la valeur d'échantillon de durée de feu de signalisation de la phase d'intersection comprend en outre :
combiner (1737) des périodes de temps adjacentes selon la distribution d'échantillon s'il est déterminé que la distribution d'échantillon de durée de feu de signalisation de la phase d'intersection de chaque période de temps à l'intersection de réseau routier n'est pas concentrée.

11. Procédé de mise en oeuvre de services de voyage, comprenant:
obtenir (210) une information de point de départ et une information de destination ;
obtenir (230) un trajet planifié et une information de durée qui concordent avec l'information de point de départ et l'information de destination, dans lequel l'information de durée comprend des données de durée de feu de signalisation d'une intersection de réseau routier sur le trajet planifié, et les données de durée de feu de signalisation étant générées en utilisant le procédé selon l'une quelconque des revendications 1 à 10 ; et
rapporter (250) une durée de circulation du trajet planifié en fonction de l'information de durée.

12. Procédé selon la revendication 11, comprenant en outre :
obtenir (270), dans la navigation selon le trajet planifié, une durée de passage pour passer l'intersection de réseau routier située en avant dans le trajet planifié, dans lequel la durée de passage est calculée en fonction des données de durée de feu de signalisation de l'intersection de réseau routier située en avant ; et
rapporter (290) la durée de passage pour passer l'intersection de réseau routier située en avant dans le trajet planifié.

13. Dispositif d'obtention de données de durée de feu de signalisation, comprenant :
un module de traitement de données (310) qui est configuré pour obtenir une phase d'intersection et un ensemble de séquences de voie correspondant à la phase d'intersection, à partir de données de voie de circulation d'une pluralité de terminaux de positionnement, dans lequel chaque terminal de positionnement fournit des données de voie de circulation correspondant à un véhicule ou à un terminal mobile portable sur une intersection de réseau routier à laquelle appartient la phase d'intersection, et l'ensemble de séquences de voies comprend de multiples séquences de voies qui sont obtenues à partir des données de voies de circulation correspondant à la phase d'intersection, dans lequel les données de voies de circulation correspondant à la phase d'intersection sont des données de voies de circulation provenant des multiples terminaux de positionnement dans lesquels une voie de circulation correspondante entre dans l'intersection de réseau routier et présente une direction de circulation qui concorde avec une direction de circulation autorisée dans la phase d'intersection;
un module de reconnaissance (330) qui est configuré pour reconnaître, à partir de l'ensemble de séquences de voies, de multiples séquences de voies dans lesquelles existe un état d'embouteillage, dans lequel l'existence de l'état d'embouteillage est reconnue si, selon un horodatage compris dans les données de voie de circulation, la durée de passage 'réelle pour passer l'intersection de réseau routier est plusieurs fois supérieure à une durée de passage par défaut ou si un véhicule ou un terminal portable correspondant à une séquence de voies effectue plusieurs fois une opération de circulation et d'arrêt, et pour obtenir une séquence d'alternance d'états mobiles-immobiles à partir des multiples séquences de voies dans lesquelles l'état d'embouteillage existe, dans lequel la séquence d'alternance d'états mobiles-immobiles est une séquence de voies dans laquelle l'état d'embouteillage existe;
un module d'obtention d'échantillon (350) qui est configuré pour obtenir une valeur d'échantillon de durée de feu de signalisation de la phase d'intersection sur la base de la séquence d'alternance d'états mobiles-immobiles; et
un module de génération de données de durée (370) qui est configuré pour générer les données de durée de feu de signalisation en fonction de la valeur d'échantillon de durée de feu de signalisation.

14. Dispositif de mise en oeuvre de services de voyage, comprenant:
un module d'obtention d'informations initiales (610) qui est configuré pour obtenir une information de point de départ et une information de destination ;
un module d'obtention de durée de trajet (630) qui est configuré pour obtenir un trajet planifié et une information de durée qui concordent avec l'information de point de départ et l'information de destination, l'information de durée comprenant des données de durée de feu de signalisation d'une intersection de réseau routier sur le trajet planifié, et les données de durée de feu de signalisation étant générées par le dispositif selon la revendication 13 ; et
un module de rapport de durée de circulation (650) qui est configuré pour rapporter une durée de circulation du trajet planifié en fonction de l'information de durée.
